# EUROPÄISCHE PATENTANMELDUNG

(11) **EP 1 889 752 A2**
(43) Veröffentlichungstag der Anmeldung: **20.02.2008**
(21) Anmeldenummer: 07016028.8
(22) Anmeldetag: 15.08.2007
(51) Int. Cl.: B60R 19/48

(54) **Integration eines Bauteils in ein Anbau-/Einbauteil für Kraftfahrzeuge**

(30) Priorität: 16.08.2006 DE 102006038437; 21.06.2007 DE 102007029069
(71) Anmelder: Plastal GmbH, 91781 Weissenburg (DE)
(72) Erfinder: Janthur, Giselher, 65205 Wiesbaden (DE); Sandner, Norbert, 90763 Fürth (DE); Smith, Lewis, Coggeshall Essex UK C06 1TX (GB); Zinnecker, Martin, 91614 Mönchsroth (DE)
(74) Vertreter: Scherzberg, Andreas Hans

(57) **Zusammenfassung**

Die Erfindung betrifft ein Anbau-/Einbauteil für Kraftfahrzeuge an dem Bauteile befestigt sind.

Dadurch, dass die Bauteile über ein Filmscharnier (3) einstückig mit dem Anbau-/Einbauteil verbunden sind, sind die Logistik-, Montage- und Werkzeugkosten, die aufgrund dieser Bauteile entstehen, reduziert.

## Beschreibung

Die Erfindung betrifft ein Anbau-/Einbauteil für Kraftfahrzeuge an dem Bauteile befestigt sind.

Kundenseitige Vorgaben beim Stoßfänger für Kraftfahrzeuge sehen in der Regel eine Aussparung im Stoßfänger vor, durch die eine Abschleppöse für den Endkunden erreichbar ist. Aus Designgründen wird diese Aussparung mit einem Deckel verschlossen, der mittels eines Fangbandes gegen Verlust gesichert ist. Befestigt wird der Deckel in der Regel durch Rasthaken.

Der Deckel der Abschleppöse, der in der Regel in der Wagenfarbe lackiert ist, und ein Fangband sind bei der Montage des Stoßfängers Just in Sequenz vom Zulieferer an die Montagelinie des Autoherstellers zu liefern. Dies verursacht Kosten durch logistischen Aufwand, Vorratshaltung und Montagezeit.

Der Erfindung liegt die Aufgabe zugrunde, ein Anbau-/Einbauteil für Kraftfahrzeuge an dem Bauteile befestigt sind so zu verbessern, dass die Logistik-, Montage- und Werkzeugkosten, die aufgrund dieser Bauteile entstehen, reduziert sind.

Erfindungsgemäß wird diese Aufgabe dadurch gelöst, dass die Bauteile über ein Filmscharnier einstückig mit dem Anbau-/Einbauteil verbunden sind. Hierdurch ist das Bauteil in das Anbau-/Einbauteil integriert.

Dies ist ähnlich dem aus dem Konsumwarenbereich bekannten Lösungsweg der direkten Anspritzung von Deckeln, mit Hilfe von Filmangüssen (zum Beispiel bei Shampoo-Flaschen).

Die Bauteile sind zum Beispiel Deckel, Verstärkungsteile, Gitter, Gittereinsätze oder Abdeckungen.

Eine bevorzugte Ausführungsform zeichnet sich dadurch aus, dass das Anbau-/Einbauteil eine Stoßfängeraußenhaut eines Stoßfängers und das Bauteil ein Deckel zur Abdeckung der Aussparung für eine Abschleppöse ist.

Zur Endbefestigung des durch ein Filmscharnier mit dem Anbau-/Einbauteil verbundenen Bauteils sind in einer Ausgestaltung der Erfindung am Bauteil erste Befestigungselemente angeordnet, die zu zweiten Befestigungselementen am Anbau-/Einbauteil passen, so dass das Bauteil am Anbau-/Einbauteil über die ersten und zweiten Befestigungselemente fixierbar ist.

Bevorzugt umfassen die Befestigungselemente Einrastelemente und daran angepasste Aufnahmeelemente.

In einer vorteilhaften Ausführungsform sind die Einrastelemente Rasthaken, die am Bauteil angeordnet sind und sind die Aufnahmeelemente am Anbau-/Einbauteil angeordnet.

Der Stoßfänger kann ein Bug- oder Heckstoßfänger sein.

Die Dicke des Filmscharniers beträgt vorteilhaft mindestens 0,6 mm.

Ein erfindungsgemäßes Verfahren zur Herstellung eines Anbau-/Einbauteils für Kraftfahrzeuge an dem Bauteile befestigt werden, insbesondere zur Herstellung eines Anbau-/Einbauteils, wie eben beschrieben, ist dadurch gekennzeichnet, dass die Bauteile zusammen mit dem Anbau-/Einbauteil in einem Werkzeug spritzgegossen werden, wobei die Spritzform der Bauteile mit der Spritzform des Anbau-/Einbauteils über zumindest einen später als Filmscharnier (3) wirkenden Füllkanal verbunden ist oder die Bauteile an das Anbau-/Einbauteil angespritzt werden, wobei die Bauteile mit dem Anbau-/Einbauteil ebenfalls über einen als Filmscharnier (3) wirkenden Füllkanal verbunden sind.

In einigen Fällen kann es vorteilhaft sein, wenn neben dem als Filmscharnier wirkenden Füllkanal zumindest ein weiterer Füllkanal angeordnet ist, der ebenfalls die Spritzform der Bauteile mit der Spritzform des Anbau-/Einbauteils verbindet und dieser Füllkanal bzw. der darin erstarrte Kunststoff nach dem Spritzgießvorgang abgebrochen wird.

Eine bevorzugte Anwendung des erfindungsgemäßen Verfahrens ist der Deckel der Abschleppöse. Dieser wird erfindungsgemäß zusammen mit dem Stoßfänger in einem Werkzeug spritzgegossen. Nach der Entnahme des aus einem Kunststoff bestehenden Stoßfängers kann der, mittels eines Filmscharniers angespritzte Deckel umgeklappt und mit Rasthaken fixiert werden. Die Aussparung im Stoßfänger, durch die die Abschleppöse erreicht werden kann, ist somit verschlossen. Das Filmscharnier erlaubt hierbei die verlangte wiederholte Möglichkeit zur Öffnung und Schließung des Deckels.

Filmscharniere zum direkten Anspritzen eignen sich auch für andere Anbau/Einbauteilen für Kraftfahrzeuge, an denen Bauteile befestigt sind und auch für andere Bauteile an Stoßfängern, nicht nur im Bereich der Abdeckung der Abschleppöse.

Nachfolgend wird die Erfindung anhand verschiedener Figuren näher erläutert.

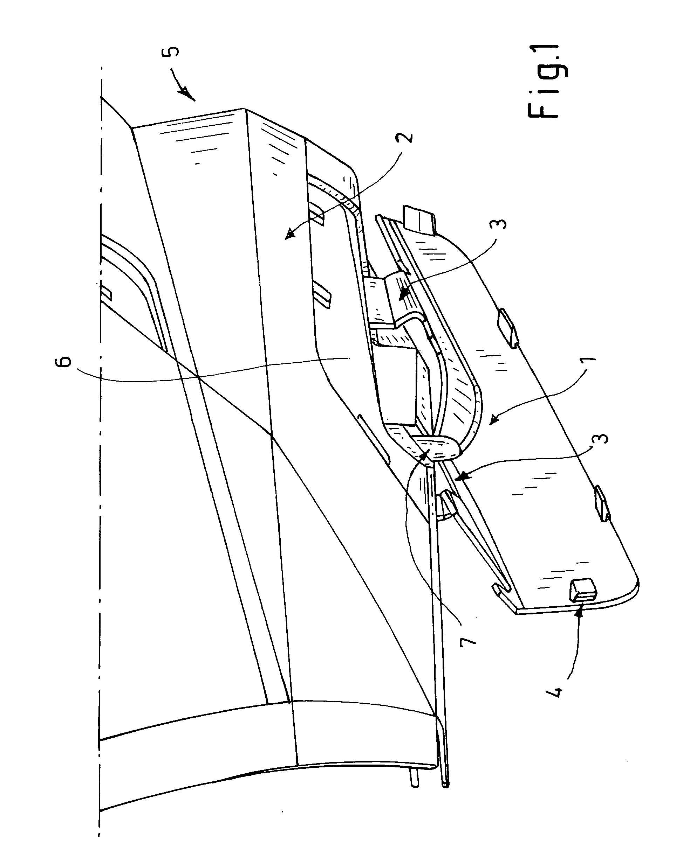

Figur 1 zeigt eine seitliche Aufnahme eines Stoßfängers 5. Mit dem Bezugszeichen 2 ist die Stoßfängeraußenhaut bezeichnet. In der Stoßfängeraußenhaut 2 ist eine Aussparung 6 angeordnet. Durch diese Aussparung 6 ist eine hier nicht gezeigte Abschleppöse erreichbar, die sich hinter der Aussparung 6 befindet.

Wenn die Abschleppöse nicht benötigt wird, wird die Aussparung 6 durch einen Deckel 1 verschlossen. Hierzu sind am Deckel 1 Rasthaken 4 angeordnet, die in entsprechende Aufnahmen an der Stoßfängeraußenhaut 2 einrasten.

Der Deckel 1 ist ausnahmslos über Filmscharniere 3 mit der Stoßfängeraußenhaut 2 verbunden. Diese Filmscharniere 3 sind so ausgebildet, dass sich der Deckel 1 von der Stoßfängeraußenhaut 2 lösen bzw. aufklappen und wieder zuklappen lässt. Die Stärke der Filmscharniere 3 und deren Breite sind abhängig von der Größe des angespritzten Bauteils sowie von dem Drehwinkel und der Drehachse des Filmscharniers 3. Eine Deckelgröße von zum Beispiel 50 x 50 mm benötigt ein Filmscharnier 3 von ca. 10 mm Breite. Größere Deckel 1 benötigen breitere Filmscharniere 3. Die Stärke und die Breite der Filmscharniere 3 müssen so gewählt sein, dass beim Spritzgießen eine problemlose Füllung des, mittels Filmscharnier 3 angebundenen Bauteils, gegeben ist. Um eine gute Füllung zu erzielen haben sich in den Filmscharnieren 3 Filmdicken von mind. 0,6 mm als gut geeignet herausgestellt. Stärken unter 0,6 mm zeigten Probleme in der Füllung. Die Filmscharniere 3 sind derart gestaltet, dass sich die Wandstärke des Filmscharniers 3 ausgehend von der Stoßfängeraußenhaut 2 hin zum eigentlichen Filmscharnier fließend verringert und dadurch keine plötzlichen Änderungen in der Dicke, z. B durch Stufen auftreten. Es wird kein Fangband benötigt, da der Deckel 1 durch die Filmscharniere 3 auf- und zuklappbar in die Stoßfängeraußenhaut 2 integriert ist, bzw. einstückig mit der Stoßfängeraußenhaut 2 ausgebildet ist und nicht abfallen kann.

Der Deckel 1 wird zusammen mit der Stoßfängeraußenhaut 2 in einem Werkzeug spritzgegossen.

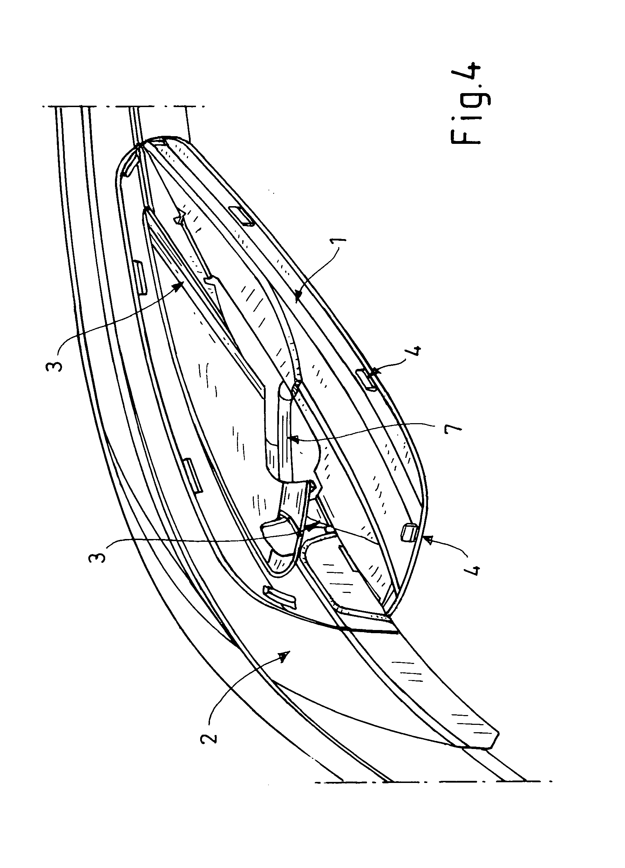

Ist die Füllung des angebundenen Bauteils, nicht vollständig möglich, besteht die Möglichkeit im Werkzeug einen weiteren Füllkanal 7 zwischen der Stoßfängeraußenhaut 2 und Deckel 1 einzufügen, bzw. das angebundene Bauteil nochmals gesondert anzuspritzen. In den Figuren 1 und 4 ist genannter Füllkanal 7 gut zu erkennen bzw. die dadurch erzeugte starre Verbindung zwischen der Stoßfängeraußenhaut 2 und Deckel 1. Vor dem ersten Zusammenbau ist dieser Füllkanal 7 zu entfernen, zum Beispiel abzubrechen.

Der Stoßfänger 5 kann ein Bug- oder Heckstoßfänger sein. In Figur 1 ist ein Heckstoßfänger gezeigt.

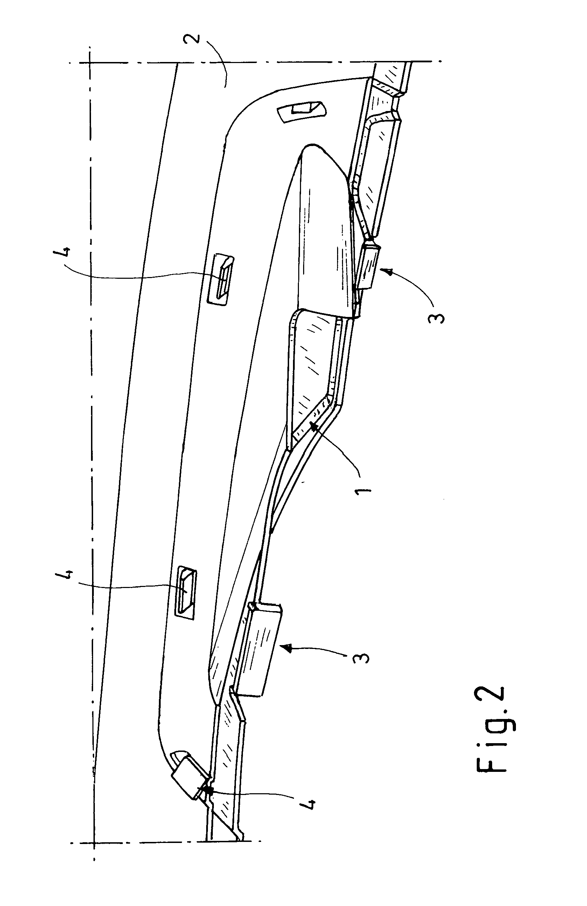

Figur 2 zeigt die Stoßfängeraußenhaut 2 gemäß Figur 1 von innen im verrasteten Zustand des Deckels 1. Die Filmscharniere 3 sind zusammengeklappt und die Rasthaken 4 sind in passende Aufnahmen an der Stoßfängeraußenhaut 2 eingerastet. Die Aussparung 6 ist verschlossen.

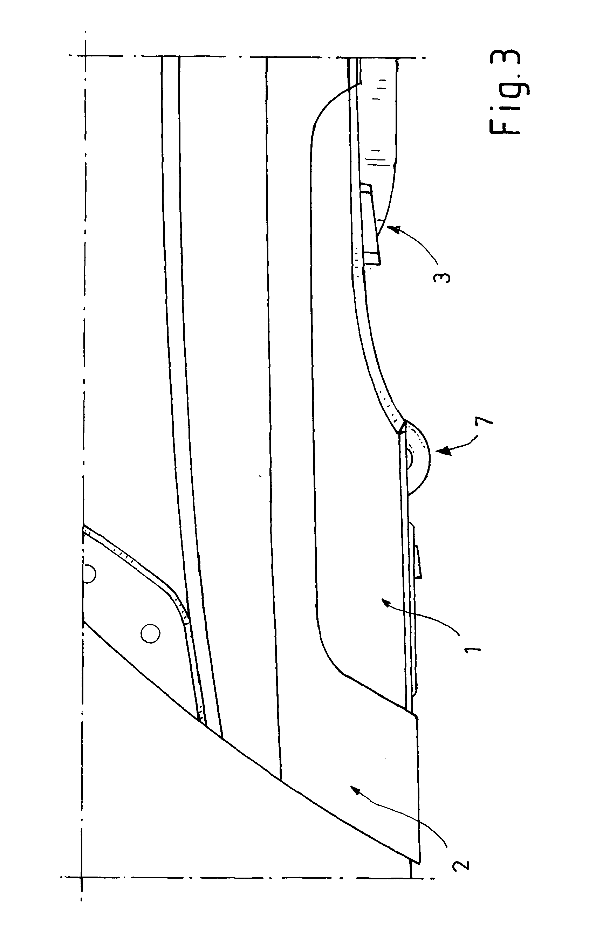

Figur 3 zeigt die Stoßfängeraußenhaut 2 gemäß Figur 1 von außen im verrasteten Zustand des Deckels 1. Die Filmscharniere 3 sind zusammengeklappt. Zu erkennen ist ein Teil des Füllkanals 7, der in der Regel nach der Entnahme der Stoßfängeraußenhaut 2 aus dem Werkzeug, entfernt wird.

Figur 4 zeigt die Stoßfängeraußenhaut 2 von außen. Der Deckel 1 ist aufgeklappt. Der Füllkanal 7 ist zu sehen sowie ebenfalls die Rasthaken 4, mit denen der Deckel 1 an dem Stoßfänger verrastbar ist.

## Patentansprüche

1. Anbau-/Einbauteil für Kraftfahrzeuge an dem Bauteile befestigt sind, **dadurch gekennzeichnet, dass** die Bauteile über ein Filmscharnier (3) einstückig mit dem Anbau-/Einbauteil verbunden sind.

2. Anbau-/Einbauteil nach Anspruch 1, **dadurch gekennzeichnet, dass** die Bauteile Deckel (1), Verstärkungsteile, Gitter, Gittereinsätze oder Abdeckungen sind.

3. Anbau-/Einbauteil nach Anspruch 1 oder 2, **dadurch gekennzeichnet, dass** das Anbau-/Einbauteil eine Stoßfängeraußenhaut eines Stoßfängers und das Bauteil ein Deckel (1) zur Abdeckung der Aussparung (6) für eine Abschleppöse ist.

4. Anbau-/Einbauteil nach einem der Ansprüche 1 bis 3, **dadurch gekennzeichnet, dass** am Bauteil erste Befestigungselemente angeordnet sind, die zu zweiten Befestigungselementen am Anbau-/Einbauteil passen, so dass das Bauteil am Anbau-/Einbauteil über die ersten und zweiten Befestigungselemente fixierbar ist.

5. Anbau-/Einbauteil nach Anspruch 4, **dadurch gekennzeichnet, dass** die Befestigungselemente Einrastelemente und daran angepasste Aufnahmeelemente umfassen.

6. Anbau-/Einbauteil nach Anspruch 5, **dadurch gekennzeichnet, dass** die Einrastelemente Rasthaken (4) sind, die am Bauteil angeordnet sind und die Aufnahmeelemente am Anbau-/Einbauteil angeordnet sind.

7. Anbau-/Einbauteil nach einem der Ansprüche 1 bis 6, **dadurch gekennzeichnet, dass** der Stoßfänger (5) ein Bug- oder Heckstoßfänger ist.

8. Anbau-/Einbauteil nach einem der Ansprüche 1 bis 7, **dadurch gekennzeichnet, dass** die Dicke des Filmscharniers (3) mindestens 0,6 mm beträgt.

9. Verfahren zur Herstellung eines Anbau-/Einbauteils für Kraftfahrzeuge an dem Bauteile befestigt werden, insbesondere zur Herstellung eines Anbau-/Einbauteils nach einem der Ansprüche 1 bis 8, **dadurch gekennzeichnet, dass** die Bauteile zusammen mit dem Anbau-/Einbauteil in,einem Werkzeug spritzgegossen werden, wobei die Spritzform der Bauteile mit der Spritzform des Anbau-/Einbauteils über zumindest einen später als Filmscharnier (3) wirkenden Füllkanal verbunden ist oder die Bauteile an das Anbau-/Einbauteil angespritzt werden, wobei die Bauteile mit dem Anbau-/Einbauteil ebenfalls über einen als Filmscharnier (3) wirkenden Füllkanal verbunden sind.

10. Verfahren nach Anspruch 9, **dadurch gekennzeichnet, dass** neben dem als Filmscharnier (3) wirkenden Füllkanal zumindest ein weiterer Füllkanal (7) angeordnet ist, der ebenfalls die Spritzform der Bauteile mit der Spritzform des Anbau-/Einbauteils verbindet und dieser Füllkanal (7) bzw. der darin erstarrte Kunststoff nach dem Spritzgießvorgang abgebrochen wird.
